# EUROPEAN PATENT SPECIFICATION

(11) **EP 4 103 828 B1**
(45) Date of publication and mention of the grant of the patent: **26.04.2023**
(21) Application number: 21745230.9
(22) Date of filing: 18.06.2021
(51) Int. Cl.: F02C 5/06, F02C 5/12, F02C 3/20

(54) **A PULSE DETONATION ENGINE AND A BIOGAS ENERGY RECOVERY UNIT**
IMPULSDETONATIONSMASCHINE UND EINHEIT ZUR RÜCKGEWINNUNG VON BIOGAS
MOTEUR À DÉTONATION PULSÉE ET UNITÉ DE RÉCUPÉRATION D'ÉNERGIE DE BIOGAZ

(43) Date of publication of application: 21.12.2022
(73) Proprietor: Unikasset, spol. s r.o., 70200 Ostrava (CZ); Vysoká Skola Bánská - Technická Univerzita Ostrava, 70800 Ostrava-Poruba (CZ)
(72) Inventor: MADRY, Ferdinand, 73801 Frýdek-Místek (CZ); RIEMEL, David, 74724 Strahovice (CZ); VÝTISK, Tomás, 74766 Dolní Lhota (CZ); RUSÍN, Jirí, 73911 Frýdlant nad Ostravicí (CZ)
(74) Representative: Kendereski, Dusan
(86) International application number: PCT/CZ2021/050064
(87) International publication number: WO 2022/174844

(56) References cited:
- US-A- 2 609 660
- US-A- 4 222 231
- US-A- 5 345 758

## Description

### Technical Field

This invention relates to a pulse detonation engine for the combustion of a mixture of biogas and hydrogen, as well as to a biogas energy recovery unit for transforming the chemical energy of biogas into electrical and thermal energy.

### Background Art

The growing need to streamline the production of any kind of energy supports the emergence of technologies working on principles using renewable sources and, at the same time, low-potential waste heat, which arises in the process of transforming their energy.

A pulse detonation engine is one of the promising engines currently used as an aircraft drive, since its design allows intermittent permanent detonation and thus achieves significant flue gas thrust at the outlet. In a pulse detonation engine, the pressure of the emerging flue gas of the detonating fuel and their kinetic energy increases, thus increasing thermodynamical efficiency and thrust while being structurally and design-wise rather undemanding. Examples of known pulse detonation engines can be found in US 2609660 A, US 4222231 A and US 5345758 A.

Until now, various fuels such as hydrogen (H₂), a mixture of ethylene (C₂H₄) and propane (C₃H₈), or a mixture of ethylene and hydrogen have been tested for use in a pulse detonation engine, but due to the high demands of sustained provision of such energy sources, research has recently focused more on finding other sustainable energy sources while maintaining strict emission limits. Such fuel appears to be biogas, which is a renewable energy source and whose main components affecting calorific value are methane (CH₄) and carbon dioxide (CO₂).

The use of biogas for the production of electricity and heat is widely known and mainly used in biogas plants in combustion engines that are part of cogeneration units, as well as the use of waste heat in cooling engines in which this biogas can be combusted.

Hydrogen is also known to be much more reactive than methane itself, so this gas has been tested to enrich hydrocarbon fuels (propane, methane, LPG) to improve combustion performance. The parameters and characteristics of heat release from flue gas during the combustion of a mixture of biogas and hydrogen in diesel engines were also examined. At the same time, there is a lot of research in the area that confirms higher performance of biogas-powered diesel engines than those burning biogas-hydrogen mixtures.

The effect of enrichment of methane, which is the main reactive component in biogas, with a certain amount of hydrogen in the combustion of this fuel mixture with air (CH₄/H₂/Air) on detonation properties is known in the areas of flame propagation characteristics, transition from deflation to detonation, rate of detonation, changes in flue gas pressure and temperature and various fuel/air ratios.

To date, studies that would address the effect of biogas use in a pulse detonation engine are very limited and focus only on mathematical modelling, not resulting in a real engine design solution. The most important in this area is the mathematical study of Elhawara et al. (2020) entitled "Experimental study of using biogas in Pulse Detonation Engine with hydrogen enrichment" for combustion of a mixture of biogas and hydrogen with air at an initial pressure of 0.1 MPa and a temperature of 70 °C (343.15 K) and at a stoichiometric (equivalence) ratio fuel/air of 0.7 to 1.0 with different results in the field of size of detonation achieved by Mach's number, temperature and pressure of the generated flue gas. The study also comprises a pulse detonation engine in an experimental design, but without structural details.

The effect of cell size of individual gases is also known, as is the result of an experiment that proves that biogas detonation is slower compared to propane for this reason. This means that it is very difficult to achieve detonation of pure biogas and in theory it may not be achieved at all due to the CO₂ content, which is an important component of biogas, and at the same time, it is a strong anti-detonation element due to the size of its cells (i. e. the diameter of a CO₂ detonation cell in the first layer of the shock wave).

For the above reasons, the combustion of biogas in a pulse detonation engine creates the assumption of essentially using more reactive gas (e. g. H₂) to enrich raw biogas. The effect of hydrogen biogas enrichment in a real working pulse detonation engine is still unknown and no research has been done in this field. In the current state of the art, pulse detonation engines for combustion of a mixture of biogas and hydrogen while maintaining permanent detonation are not known.

### Summary of Invention

Therefore, the aim of this invention is to provide a pulse detonation engine for combustion of a mixture of biogas and hydrogen with permanent detonation in a combustion chamber and with maximum flue gas rate at the outlet of the engine.

The above-formulated aim is achieved in the first aspect of this invention by a pulse detonation engine according to claim 1.

The pulse detonation engine comprises a valve assembly and a combustion chamber connected to the valve assembly, wherein the combustion chamber comprises a detonation initiation device (e. g. a spark plug) and a first flue gas outlet from the combustion chamber.

The valve assembly comprises a suction diffuser for supplying combustion air, a fuel supply tube for supplying fuel, a baffle, an air curtain, a valve and a support plate of the valve.

The suction diffuser is in the shape of de Laval nozzle with a variable, converging-diverging circular cross-section and extends along the direction of a longitudinal axis. The circular cross-section of the suction diffuser is narrower in a central portion thereof than in an end portion thereof facing the combustion chamber. The shape derived from de Laval nozzle ensures maximum flow velocity and thus the transport of necessary amount of air to the combustion chamber. To improve the efficiency of air expansion behind the central portion of the suction diffuser with the narrowest (critical) cross-section, an expanding end portion is connected thereto, the end diameter of which is essentially the same as the diameter of the air curtain and in which there is a further decrease in pressure and an increase in air velocity. Basic dimensions of the suction diffuser were chosen on the basis of the size (diameter) of the combustion chamber and in the range of known angles of expansion/narrowing of the nozzle in the range of 10-40° (e. g. 10°, 15°, 20°, 25°, 30°, 35° or 40°). Thus, the main dimensions of the suction diffuser can be of 30-40 mm in diameter at the inlet (e. g. 30, 32, 34, 36, 38 or 40 mm), 50-60 mm in diameter at the outlet (e. g. 50, 52, 54, 56, 58 or 60 mm) and a length of 40-60 mm (e. g. 40, 44, 48,52, 56 or 60 mm).

The fuel supply tube extends through the centre of the suction diffuser in the direction of the longitudinal axis and leads to the combustion chamber. The expansion of flue gas into the fuel supply tube is prevented by the ratio of pressures in the fuel supply tube and at the outlet from the combustion chamber. While in the fuel supply tube, there is a permanent fuel overpressure of about 0.8-0.9 bar (0.08-0.09 MPa), which means an absolute pressure of about 1.8-1.9 bar (0.18-0.19 MPa), the outlet from the combustion chamber experiences a constant vacuum, i. e. an absolute pressure below 0.8-0.9 bar (0.08-0.09 MPa), due to its shape and flue gas expanding into the surroundings. The flue gasses therefore go through the route of the "least resistance" to the outlet tube of the combustion chamber, see below.

The baffle for directing combustion air flow is arranged outside the fuel supply tube and co-axially relative to the longitudinal axis, wherein the baffle is in the shape of a cone or a truncated cone, the base of which is oriented towards the end portion of the suction diffuser. The baffle in the shape of a cone or a truncated cone aims to define an air channel and to ensure air supply towards the air curtain in an annular area defined on the inner side by a circle, which is smaller in diameter than the circle on which inner perforations in the air curtain are located and which corresponds to the diameter of the base of the baffle cone on the side facing the combustion chamber (e. g. 20, 22, 25 or 26 mm). On the other hand, for structural reasons, the upper (apex) diameter of the baffle cone (e. g. 8, 9, 10 or 11 mm) is greater than the diameter of the fuel supply tube, and at the same time the length of the baffle (e. g. 15, 17 or 18 mm) is determined by selecting its external angle (e. g. 17°, 20° or 22°). On the outside, the air channel is defined by the interior wall of the suction diffuser. With these parameters, it is possible to determine the necessary width of the air channel in its narrowest and widest cross-section in the direction of airflow. Thus, the width of the air gap at the narrowest point can be 8-11 mm, and the width of the air gap at the widest point can be 15-18 mm.

The air curtain is arranged outside the fuel supply tube and adjacent to the end portion of the suction diffuser and to the base of the baffle such that it is arranged perpendicular to the longitudinal axis, wherein the air curtain comprises perforations for air supply between the part of the air curtain adjacent to the end portion of the suction diffuser and the part of the air curtain adjacent to the base of the baffle, i. e. in the area where the air curtain is not adjacent to the end portion of the suction diffuser and to the baffle base. There is an opening in the centre of the air curtain for the fuel supply tube.

The support plate is arranged outside the fuel supply tube and at a distance from the air curtain in the direction of the longitudinal axis such that it is arranged perpendicular to the longitudinal axis, wherein the side of the support plate adjacent to the air curtain is of a concave shape or of a shape narrowing towards the circumference of the support plate. There is an opening in the centre of the support plate for the fuel supply tube.

The valve is arranged outside the fuel supply tube and between the air curtain and the support plate such that it is arranged perpendicular to the longitudinal axis. The valve is in the shape of an n-polygon or a circle with an opening for the fuel supply tube in the centre and with a circular base around the perimeter of the opening. The valve is divided from a circumferential part towards the circular base into n shutters of an essentially trapezoidal shape. The material of the shutters requires a construction made of refractory steel at a minimum thickness, e. g. in the range of 0.10-0.60 mm, e. g. 0.10, 0.15, 0.20, 0.25, 0.30, 0.35, 0.40, 0.45, 0.50, 0.55 or 0.60 mm. Each short base of said trapezoids is firmly or integrally connected to the circular base and each long base of said trapezoids forms the circumferential part of the valve. The shutters of the valve are bendable such that in a closed position of the valve, the shutters are adjacent to the air curtain, thus overlapping the perforations and blocking air supply into the combustion chamber as well as expansion of flue gas into the suction diffuser, and in an open position of the valve, the shutters are adjacent to the support plate, thereby leaving the perforations open and allowing air to flow into the combustion chamber. Opening and closing of the valve (i. e. deflection of the shutters) is due to a decrease/ increase in relative pressure in the combustion chamber by about 0.1-0.2 bar (0.01-0.02 MPa).

The combustion chamber is connected to the valve assembly in an axial direction in the direction of the longitudinal axis. The combustion chamber is designed for the combustion of an available amount of biogas, i. e. it is size-adapted to the expected flow rate of the fuel mixture (e. g. 0.05-0.15 or 0.09-0.12 m_{N}³/min) and the necessary air oxygenation to meet the minimum theoretical amount of combustion air. This also specifies the engine power. The volumetric flow rate of fuel, the amount of combustion air required and thus the amount of flue gas produced (e. g. 2.0-3.0 or 2.2-2.6 m_{N}³/min) determine the optimal size of the combustion chamber for perfect mixing of the fuel mixture with air before its actual ignition using a spark plug, for explosion and expansion into the outlet tube. Assuming that this amount of flue gas is held for 0.01 s in the combustion chamber, the combustion chamber size is about 0.2-0.6 m³, e. g. 0.2, 0.3, 0.4, 0.5 or 0.6 m³. The engine body must be made of refractory material due to high combustion temperatures.

In a preferred embodiment, the perforations are arranged on the air curtain in two circular rows such that the outer perforations are arranged along an outer circle and the inner perforations are arranged along an inner circle at a distance from the outer circle. The outer perforations can have a larger diameter than the inner perforations. The larger diameter of the outer perforations at a greater distance from the centre of the air curtain ensures airflow in the end (expanding) portion of the suction diffuser. Adjacent outer and inner perforations can be arranged radially relative to the centre of the air curtain. In this arrangement, in the closed position of the valve, each shutter can then overlap one inner and one outer perforation.

The diameter, number and distribution of perforations over the area of the air curtain, as well as the shape and number of valve shutters, are the result of experiments leading to ensuring stable engine operation. In theory, the number of perforations and their size may change, but with a given amount of combustion fuel (engine power), the area of perforations in the air curtain should be maintained, which area is the determining element for the transport of the necessary amount of combustion air. The diameters of the outer perforations of the air curtain can be 4-7 mm, e. g. 4.2 mm, 4.9 mm or 5.7 mm, and those of the inner perforations can be 2-4 mm, e. g. 2.5 mm, 3.2 mm or 3.8 mm, so that the flow cross-section of airflow is 390-415 mm² in an exemplary engine, e. g. 394, 397, 400, 403, 407 or 411 mm². It is possible to change the ratio of diameters of these perforations, but the total cross-section in tolerance of +/- 5 % should be maintained.

In a particularly preferred embodiment, the engine comprises twelve outer perforations of the air curtain, twelve inner perforations of the air curtain and twelve shutters of the valve. It can be considered that the number of shutters could be less than the number of pairs of inner and outer perforations, and that one shutter would overlap more perforations at the same time, but this solution in turn does not allow the necessary deflection to be achieved due to the strength of the material. On the contrary, with a larger number of narrower shutters, one can observe destruction (break-off) in the area of the short trapezoidal base. Therefore, 12 shutters and 2x12 perforations are used, wherein one shutter closes/opens one pair of inner and outer perforations in the air curtain.

In a preferred embodiment, the diameter of the valve and the diameter of the support plate are smaller than the diameter of the air curtain. Furthermore, the diameter of the support plate is smaller than the diameter of the valve. The outer diameters of the air curtain, valve and support plate are decreasing in the direction of airflow (e. g. D(air curtain) = 75 mm, D(valve) = 60 mm, D(support plate) = 56 mm), thus widening the flow air channel that is formed between the outer edge of the support plate and the interior side of a high-temperature graphite seal between the suction diffuser and the combustion chamber. On the end sharp inner edge of the flow air channel (i. e. the combination of a support plate and an open valve with a diameter slightly larger than the diameter of the support plate), there is turbulent airflow before entering the combustion chamber, which favourably affects mixing thereof with the fuel fed to the same point at the inlet to the combustion chamber from the feed openings of the inlet tube.

In a preferred embodiment, the valve shutters are bendable at an angle in the range of 3-13°. The bending angle of the shutter is determined by the apex outer angle of the support plate and has been experimentally determined in the range of 3-13°, e. g. 3°, 4°, 5°, 6°, 7°, 8°, 9°, 10°, 11°, 12° or 13°. At a smaller apex angle of the support plate, i. e. with a higher deflection of the valve shutters, the shutters are more frequently broken off and, in particular, there is a large excess of air in the combustion chamber, which results in excessive cooling and non-detonation. At a larger apex angle, the shutters do not break, but the necessary amount of combustion air is not reached in the combustion chamber. The current arrangement thus ensures stable engine operation.

In a preferred embodiment, an insulating pad is arranged between the circular base of the valve and the support plate and outside the fuel supply tube such that it is arranged perpendicular relative to the longitudinal axis. The insulating pad, preferably a mica pad, functions as thermal insulation to minimize heat transfer from the support plate to the circular base of the valve shutter, which are cyclically stressed by bending at this point.

In a preferred embodiment, the fuel supply tube at an end leading to the combustion chamber comprises feed openings oriented essentially radially relative to the longitudinal axis. The fuel supply to the combustion chamber is performed by a system of openings at the end of the tube extending along the longitudinal axis of the engine and passing through the baffle, air curtain, valve and support plate and locked by means of two nuts located in about 1/3 of the length (on the apex diameter of the baffle) and at the end of the fuel supply tube, under the support plate. At the same time, the locking of the fuel supply tube serves to firmly connect the mentioned parts of the valve assembly.

The fuel supply tube is blinded at the end leading to the combustion chamber and comprises 3 openings with a diameter of 1-3 mm, e. g. 1.2 mm, 1.5 mm or 2.1 mm, for supplying fuel, which are constructed through a locking nut radially from the centre of the fuel supply tube to its outer surface, thus functioning as simple nozzles. The fuel flowing through these nozzles is fed into the combustion chamber radially relative to the longitudinal axis of the fuel flow in the fuel supply tube and at the same time in a counter-current with the combustion air with which it mixes perfectly along the cross-section of the combustion chamber. After that, the mixture is ignited with the help of a spark plug (a detonation initiation means) and it detonates. After reaching the necessary temperature in the combustion chamber, the function of the spark plug is no longer needed, and the mixture self-ignites.

In a preferred embodiment, the combustion chamber is connected to an outlet tube with the first flue gas outlet. The outlet tube ensures the propagation of shock wave after detonation of the mixture and obtaining the necessary flue gas velocity at the outlet. The diameter (d) and length (L) of the tube were chosen taking into account the width of the emerging detonation cells of CH₄ and H₂, with L/d being above 6-8, e. g. 6, 7, 8 or 10. At the end of the outlet tube, a nozzle is preferably installed for efficient expansion of the outlet flue gas, which is then brought by a semi-open connecting pipe system at high velocity and temperature to the input of a turbocharger or a centripetal gas turbine.

The above-formulated aim is achieved in the second aspect of this invention by a biogas energy recovery unit, comprising the pulse detonation engine described herein, according to claim 13.

In this unit, the pulse detonation engine at the first flue gas outlet is further connected to a turbocharger or a centripetal gas turbine, which turbocharger or centripetal gas turbine is connected to a first power generator.

In a preferred embodiment, the turbocharger or the centripetal gas turbine is further connected via a second flue gas outlet to a flue gas exchanger, in which flue gas exchanger, the flue gas is in thermal contact with a heat transfer medium of a closed Rankin-Clausius steam cycle. The flue gas is configured to leave the flue gas exchanger by a third flue gas outlet.

The closed Rankin-Clausius steam cycle may comprise the flue gas exchanger connected to a surface cooler arranged in thermal contact with the pulse detonation engine, preferably with the outlet tube of the pulse detonation engine. The surface cooler can also be connected to a thrust steam turbine, which is connected to a second power generator. The thrust steam turbine can further be connected via a supply tank and a feeding pump back to the flue gas exchanger.

Between the thrust steam turbine and the supply tank, a cooler can be arranged in the closed Rankin-Clausius steam cycle, which is optionally connected to an accumulator or to a heating system of a fermentation tank of a biogas station or to a biomass drying system.

The unit thus enables efficient use of biogas chemical energy by transforming it into mechanical, thermal and electrical energy. The unit uses technology of the pulse detonating engine combusting biogas mixed with hydrogen, in conjunction with the rotor of the radial turbocharger (or the centripetal gas turbine), and by connecting it to the thrust steam turbine using low-parameter water vapour enthalpies obtained by heating the water with heat when cooling the engine through the heat exchanger system. It is a highly efficient transformation of the chemical energy contained in the biofuel into mechanical energy of a rotating shaft of the turbocharger (or the centripetal gas turbine) in an operationally simple and reliable device.

At the same time, part of the energy is released in the form of heat permeating through the boundaries of the system (thermal energy), and it is not lost, but used efficiently in the unit in order to increase the overall efficiency of the transformation of biogas chemical energy into electricity harvested at the terminals of the second power generator connected to the thrust steam turbine. At the end of this transformation, it is envisaged that the heat generated in the accumulator can be used purposefully, and the accumulator can be replaced by heat dissipation for heating of fermentation tanks in biogas production technology or used for drying biomass.

The system of transformation of chemical energy contained in biogas into electrical and thermal energy is unique in the present invention not only due to the type of the engine used, but also due to the system of its connection within the unit, which thus benefits from minimising energy losses generated during individual transformations, thereby increasing the overall efficiency of power production.

Last but not least, the advantage of the present unit according to the invention is the constructional, investment and operational simplicity.

The above-formulated aim is achieved in the second aspect of this invention by a method of combustion of a mixture of biogas and hydrogen in the pulse detonation engine described herein or in the biogas energy recovery unit described herein. In this method, a fuel mixture comprising CH₄, CO₂ and H₂ is fed into the combustion chamber of the pulse detonation engine, preferably in the amount of 44-60 % by volume of CH₄, 20-30 % by volume of CO₂ and 20-30 % by volume of H₂, more preferably in the amount of 44-46 % by volume of CH₄, 28-30 % by volume of CO₂ and 24-26 % by volume of H₂. The fuel mixture is fed into the combustion chamber with an overpressure of 0.8-0.9 bar (0.08-0.09 MPa).

The pulsating detonation engine according to this invention is novel mainly in that it can combust gaseous fuel and biogas in particular. During development, various mixtures of gaseous fuels were combusted, ranging from 100 % hydrogen or methane, through a mixture of technical gases with biogas to pure biogas. It has been experimentally demonstrated that the addition of biogas has a negative effect on the combustion process (detonation) and its speed, in relation to the amount of CO₂ contained therein. The engine operating with pure biogas had a heavier start and unstable combustion, accompanied by occasional engine failures. By adapting the engine design to the combustion conditions of the gaseous fuel mixture, the H₂ content limit values (20-30 % depending on the composition of the biogas) have been preferably established, wherein the engine is able to reliably burn the mixture of biogas with hydrogen in stable operation.

The pulse detonation engine is also unique in that it can process a mixture of fuel and emerging flue gas even at high temperatures, while ensuring the required compression of the fuel-air mixture, which is achieved in conventional piston internal combustion engines of conventional cogeneration units by changing the volume of the working space of the cylinder. Since this engine does not need to convert the sliding movement of a piston to the rotary movement of a shaft to obtain mechanical work to generate power in a generator, the engine works with high efficiency.

The biogas energy recovery unit according to this invention is also unique in that the exhaust gases from the pulse detonation engine (flue gas) have a high temperature and can thus be used to produce steam for expansion on the thrust steam turbine to increase the overall efficiency of power production in the described unit.

### Brief Description of Drawings

The underlying idea of the invention is further clarified in real working examples which are described using the accompanying drawings, where:
**Fig.1**

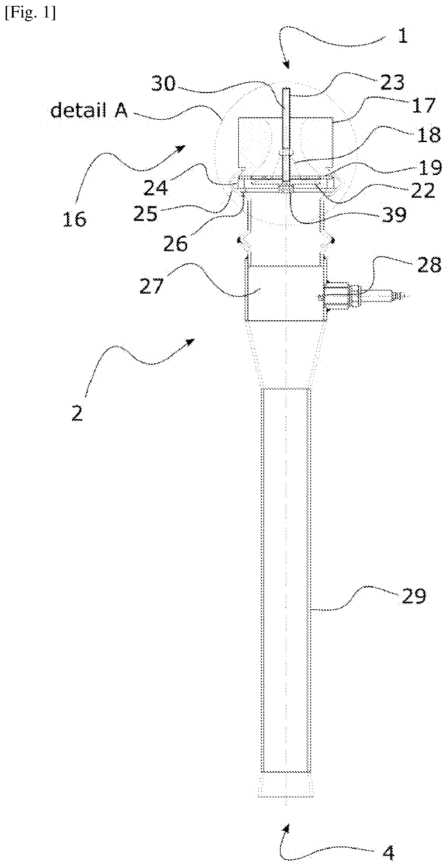

   [Fig.1] shows a side sectional view of the pulse detonation engine;
**Fig.2**

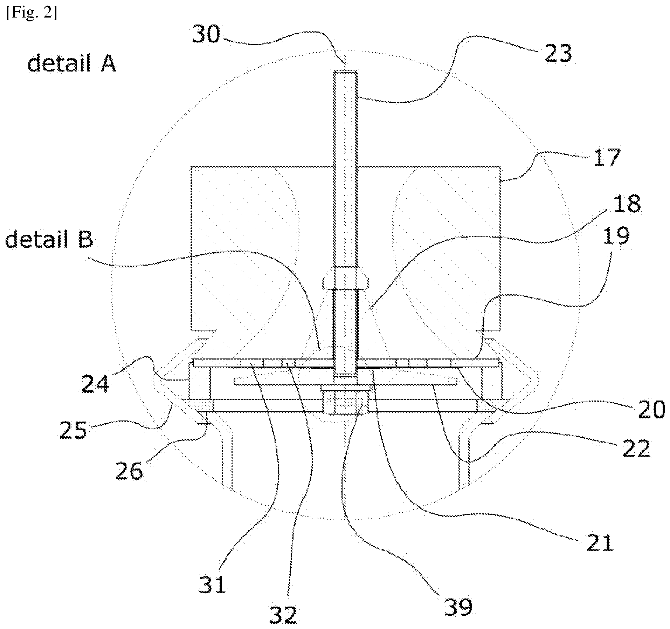

   [Fig.2] shows detail A of [Fig.1];
**Fig.3**

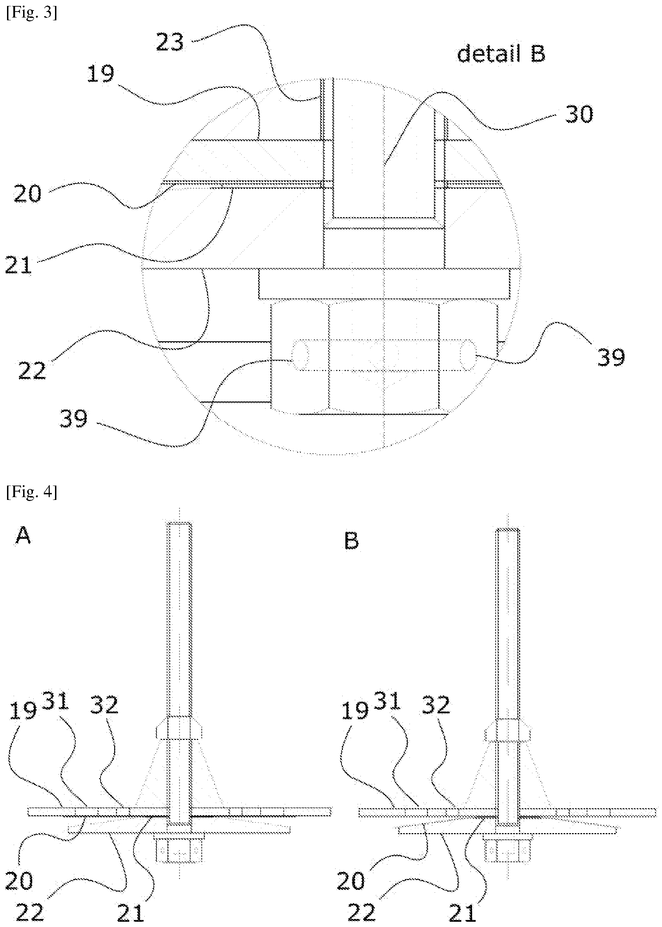

   [Fig.3] shows detail B of [Fig.2];
**Fig.4**
   [Fig.4] shows a side sectional view of the pulse detonation engine with the valve in closed (A) and open (B) positions;
**Fig.5**

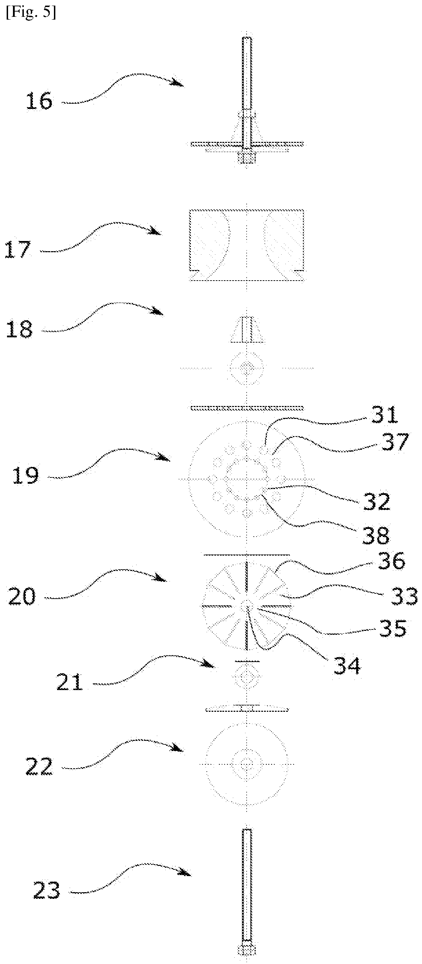

   [Fig.5] shows an exploded lateral and frontal view of the components of the pulse detonation engine;
**Fig.6**

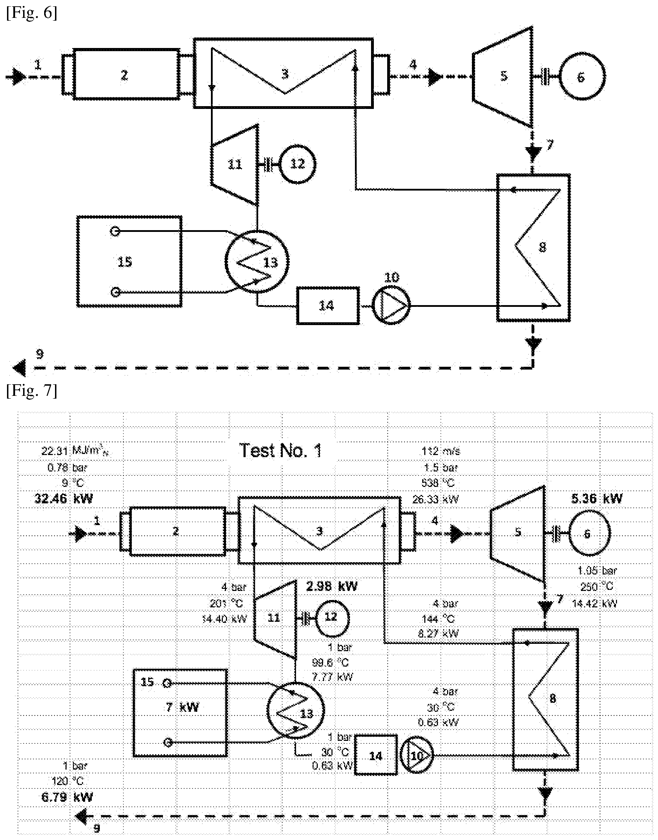

   [Fig.6] schematically shows the connection of the biogas energy recovery unit;
**Fig.7**
   [Fig.7] shows the first example of process parameters of the biogas energy recovery unit (Test No. 1);
**Fig.8**

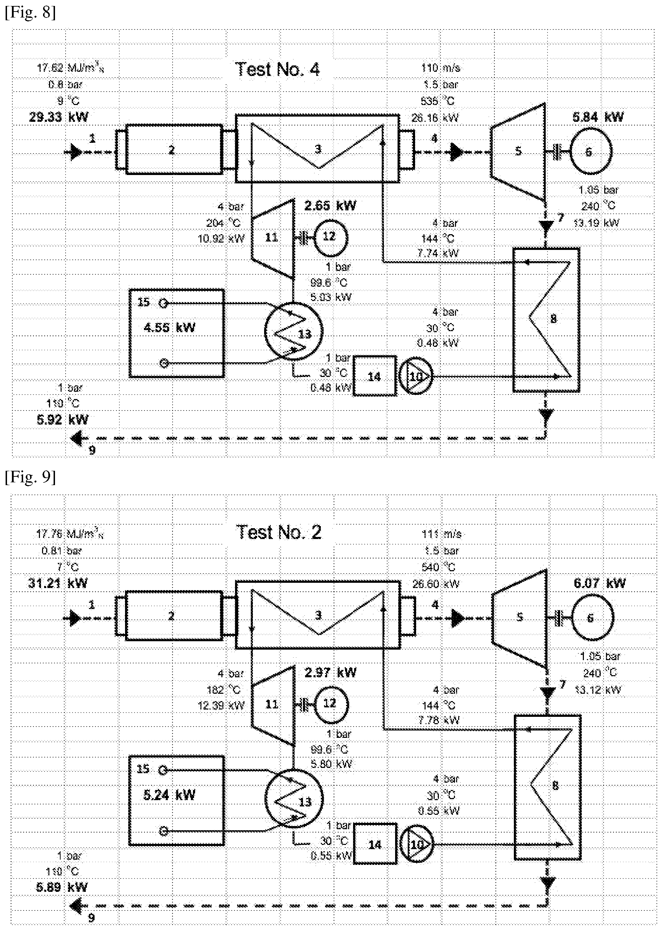

   [Fig.8] shows the second example of process parameters of the biogas energy recovery unit (Test No. 4); and
**Fig.9**
   [Fig.9] shows the third example of process parameters of the biogas energy recovery unit (Test No. 2).

### Examples

The invention will be further clarified on the examples with reference to the relevant drawings.

### Example 1

The first example of an aspect of this invention is the pulse detonation engine 2 shown as a whole in [Fig.1] and in detail in Figs. 2-5.

The pulse detonation engine 2 in [Fig.1] comprises the valve assembly 16 and the combustion chamber 27 connected to the valve assembly 16 axially along the longitudinal axis 30. The combustion chamber 27 comprises a detonation initiation means (e. g. the spark plug 28), the outlet tube 29 and the first flue gas outlet 4 from the outlet tube 29 of the combustion chamber 27. The connection between the combustion chamber 27 and the valve assembly 16 is made using a centring and limiting ring 24 and a clip 25 with a graphite seal 26. The centring and limiting ring 24 with a recess for an air curtain 19 is important from a structural point of view to ensure a tight connection between the valve assembly 16 and the combustion chamber 27 after tightening the clip 25, which in a self-locking manner exerts the necessary contact force by slipping along the oblique surfaces of the suction diffuser 17 and the combustion chamber 27. In addition, the height of the ring 24 defines the size of the air channel at the inlet to the combustion chamber 27. The graphite seal 26 prevents heat transfer by conduction between the combustion chamber 27 and the suction diffuser 17 (a heat bridge) and prevents local overheating of the air curtain 19.

The valve assembly 16 in detail in Figs. 2 and 3 comprises in the direction of fuel or combustion air flow: the suction diffuser 17 in the shape of de Laval nozzle with a variable, converging-diverging circular cross-section and intended for supplying combustion air; the fuel supply tube 23 for supplying fuel, extending through the centre of the suction diffuser 17 in the direction of the longitudinal axis 30, leading to the combustion chamber 27 and ending with feed openings 39; the baffle 18 in the shape of a cone or a truncated cone, the base of which is oriented towards the end portion of the suction diffuser 17; the air curtain 19 arranged adjacent to the end portion of the suction diffuser 17 and to the base of the baffle 18; the support plate 22 arranged at a distance from the air curtain 19 in the direction of the longitudinal axis 30 ; the valve 20 arranged between the air curtain 19 and the support plate 22; and the insulating pad 21 arranged between the circular base 35 of the valve 20 and the support plate 22. The above elements 17-23 are arranged axially along the longitudinal axis 30 and the elements 18-22 are mounted on the fuel supply tube 23 from on its external side. The elements 19-22 are arranged perpendicular relative to the longitudinal axis 30

As shown in [Fig.5], the air curtain 19 comprises the outer perforations 31 arranged along the outer circle 37 and the inner perforations 32 arranged along the inner circle 38 for supplying air between a part of the air curtain 19 adjacent to the end portion of the suction diffuser 17 and a part of the air curtain 19 adjacent to the base of the baffle 18, i. e. in the area of the air curtain 19 not adjacent to the end of the suction diffuser 17 and to the base of the baffle 18. In the air curtain 19, there is an opening in the centre for the fuel supply tube 23. The number of outer perforations 31 and the number of inner perforations 32 may be the same, e. g. twelve, with the outer perforations 31 having a larger diameter than the inner perforations 32.

As shown in [Fig.4], the side of the support plate 22 adjacent to the air curtain 19 is conical or tapered towards the circumference of the support plate 22. There is an opening in the centre for the fuel supply tube 23.

As shown in [Fig.5], the valve 20 is in the shape of an *n*-polygon or a circle with the opening 34 for the fuel supply tube 23 in the centre and with the circular base 35 around the perimeter of the opening 34. The valve 20 is divided from a circumferential part 36 towards the circular base 35 into *n* shutters 33 of an essentially trapezoidal shape, e. g. twelve shutters (the number corresponds to the number of outer and inner perforations 31, 32). Each short base of said trapezoids is firmly or integrally connected to the circular base 35 and each long base of said trapezoids forms the circumferential part 36 of the valve 20.

As shown in [Fig.5], the shutters 33 are bendable such that in the closed position of the valve 20 (Fig. 4A), the shutters 33 are adjacent to the air curtain 19, thus overlapping the perforations 31, 32 and blocking the air supply to the combustion chamber 27 and the expansion of flue gas into the suction diffuser 17, and in the open position of the valve 20 (Fig. 4B), the shutters 33 are adjacent to the support plate 22, leaving the perforations 31, 32 open and allowing air to flow into the combustion chamber 27.

The principle of function of the pulse detonation engine 2 is as follows. The mixture of biogas and hydrogen is fed via the fuel supply tube 23 through the feed openings 39 to the combustion chamber 27, where it is mixed with combustion air sucked by the suction diffuser 17, along the baffle 18, through the perforations 31, 32 of the air curtain 19 and the open valve 20 abutted against the support plate 22. In the combustion chamber 27, the spark of the electric spark plug 28 ignites and detonates the mixture of fuel and air, leading to the rapid development of flue gasses at high temperature, pressure and velocity and to leaving the outlet tube 29 and the first flue gas output 4, further transforms enthalpy and kinetic energy of the flue gas into mechanical energy. When flue gas is expanded from the combustion chamber 27, the valve 20 for supplying combustion air is also closed by being abutted against the air curtain 19 due to an underpressure in the combustion chamber 27. After leaving the combustion chamber 27, a vacuum is created in the combustion chamber 27, which opens the valve 20 by abutting it against the support plate 22.

### Example 2

The second example of an aspect of this invention is the biogas energy recovery unit, shown in [Fig.6].

The biogas energy recovery unit in [Fig.6] comprises the pulse detonation engine 2 with a fuel inlet 1 (i. e. the fuel supply tube 23). the valve assembly 16, the combustion chamber 27 and the outlet tube 29 with the first flue gas output 4. The first flue gas output 4 is connected to the turbocharger 5 or the centripetal gas turbine 5, which is further connected to the first power generator 6. The turbocharger 5 or the centripetal gas turbine 5 is further at the second flue gas outlet 7 connected to the flue gas exchanger 8, in which the flue gas is in thermal contact with the heat transfer medium of the closed Rankin-Clausius steam cycle. The flue gas is configured to leave the flue gas exchanger 8 by the third flue gas outlet 9 to the surroundings or for further processing. The Rankin-Clausius steam cycle comprises the flue gas exchanger 8 connected to the surface cooler 3 arranged in thermal contact with the outlet tube 29 of the pulse detonation engine 2. The surface cooler 3 is further connected to the thrust steam turbine 11 which is connected to the second power generator 12. The thrust steam turbine 11 is also connected to the flue gas exchanger 8 via the cooler 13, the supply tank 14 and the feeding pump 10. The cooler 13 is optionally connected to the accumulator 15 or to a heating system of a fermentation tank of a biogas station or to a biomass drying system.

The principle of function of the biogas energy recovery unit is as follows. After the fuel enters the combustion chamber 27 of the pulse detonation engine 2, the mixture of biogas and hydrogen in the required amount at an overpressure of approx. 0.8 bar is ignited together with the combustion air, and the flue gas arising from its detonation, the total energy of which corresponds to their enthalpy and the flow velocity, are routed through the outlet tube 29 with the first flue gas output 4 into the turbocharger 5 or the centripetal gas turbine 5. Part of the heat generated by the combustion of flue gas and permeating through the walls of the outlet tube 29 of the pulsating detonation engine 2 is harvested by means of the surface cooler 3. When passing through the turbocharger 5 or the centripetal gas turbine 5, one part of the enthalpy and kinetic energy of the flue gas is transformed into electricity through the high-revolution first power generator 6, and another part is, following the second flue gas output 7 from the turbocharger 5 or the centripetal gas turbine 5, used for preheating circulation water in the flue gas exchanger 8 (economizer), which can be constructed as a flue gas pipe counter-current exchanger installed before the third flue gas output 9 into the surroundings, in order to reduce the outlet temperature of the flue gas and minimize losses during the transformation of the initial chemical energy of the biogas/hydrogen mixture.

Another circuit for a more efficient transformation of input energy of the biogas-hydrogen mixture in said unit is the closed Rankin-Clausius steam cycle, the working medium of which is water. The required water pressure in this circuit (3-4 bar) is provided by the feed pump 10, after which the water is preheated in the flue gas exchanger 8 and evaporated in the surface cooler 3. Then, water in the form of slightly overheated steam at a temperature corresponding to the pressure at the outlet of the feed pump 10 is introduced to the inlet of the thrust steam turbine 11, in which its enthalpy is transformed partly into power in the second power generator 12 and partly into thermal energy, which is further used in the cooler 13 e. g. for heating a heat exchange medium for heating fermentation tanks in biogas station technology or for drying raw biomass. At the outlet of the thrust steam turbine 11, circulation already works with wet steam with a steam quality of about 60 % and its transformation into a saturated liquid is accompanied by heat dissipation in the cooler 13 and its use in the accumulator 15. The saturated liquid, at the outlet pressure from the thrust steam turbine 11, then enters the supply tank 14, from where it is transported, with the help of the feed pump 10 while increasing the pressure, to the input of the flue gas exchanger 8

Only an electric motor (or another drive) to power the feed pump 10 needs to be powered by the power produced in the first or second generator 6, 12 as part of the unit's own consumption. Other transformations take place without the need for an external energy source. The necessary flue gas pressure before entering the turbocharger 5 (the centripetal gas turbine 5) is obtained as a result of detonation of the biogas/hydrogen mixture in the combustion chamber 27 of the pulse detonation engine 2, thus replacing a compressor otherwise needed in conventional combustion turbine circulation. A boiler in a classic steam cycle is replaced by an assembly of the flue gas exchanger 8 and the surface heater 3, and the entire connection of the unit actually corresponds to principles of a combined steam-gas cycle, which up to date is a system with the highest achieved total efficiency of input energy transformation.

### Example 3

The third example of an aspect of this invention are the operational parameters of the biogas energy recovery unit, shown in Figs. 7-9 and Table 1.

The results of measurements of thermal-technical parameters during the conduct of operational tests demonstrate the possibility of achieving required power outputs depending on the amount of the input biogas, its composition and, in particular, the content of CO₂. Depending on the composition of the input biogas, its treatment and enrichment with hydrogen in the range of 20-30 % by volume is performed. When igniting such enriched biogas, it is possible to obtain the required velocity of the output flue gas (105-115 m/s) at a high temperature (530-590 °C) (803.15-863.15 K), and the enthalpy and kinetic energy thus obtained can be further transformed for the production of electric power in the range of 8-10 kW with simultaneous gain of 4-8 kW of heat. The whole process takes place in the unit with thermal efficiency of the entire circulation in the range of 57-67 % and efficiency of electricity production in the range of 43-47 %.

The results of measurements of thermal-technical parameters during the operation of the unit are given in Table 1 below and in the balance sheet diagrams of three different variants of values of the achieved outputs (Figs. 7-9).

**Table 1. Parameters measured during engine operation.**

| **Test No.** | | | **1** | **2** | **3** | **4** |
|---|---|---|---|---|---|---|
| **Figure No.** | | | 7 | 9 | - | 8 |
| **Biogas fuel** | CH₄ | % by volume | 60 | 45 | 49 | 44 |
| | CO₂ | | 20 | 30 | 29 | 29 |
| | H₂ | | 20 | 25 | 22 | 27 |
| | biogas overpressure | bar | 0.78 | 0.81 | 0.8 | 0.8 |
| | amount of biogas | m3N/s | 0.00145 | 0.00176 | 0.00172 | 0.00166 |
| **Surroundings** | ambient temperature | °C | 13 | | 5 | 5 |
| | temperature in the suction diffuser 17 | | 9 | | 9 | 9 |
| | atmospheric pressure | Pa | 98100 | | 98900 | 98900 |
| | relative humidity | % | 26 | | 75 | 75 |
| | | | | | | |
| **Pulse detonation engine** | Surface temperatures: | | | | | |
| | of the combustion chamber 27 | °C | > 900 | > 900 | > 900 | > 900 |
| | at the inlet to the outlet tube 29 | | 720 | 730 | 750 | 720 |
| | at the outlet from the outlet tube 29 | | 430 | 460 | 390 | 450 |
| **Flue gas** | Flue gas temperatures: | | | | | |
| | inside the outlet tube 29 | °C | 570 | 578 | 585 | 570 |
| | at the third flue gas outlet 9 into the surroundings | | 538 | 540 | 550 | 535 |
| | differential pressure | Pa | 3100 | 2900 | 3000 | 2900 |
| | flue gas pressure | bar | 1.5 | 1.5 | 1.5 | 1.5 |
| | velocity at first flue gas outlet 4 | m/s | 112.5 | 110.9 | 107.3 | 110.2 |

It is clear from the above results that the quality of biogas combusted in terms of CH₄ and CO₂ content, which are the basic parameters for the amount of H₂ mixed, has a major influence on the correct functioning of the pulse detonation engine and the whole unit. Reduced CH₄ content, and thus higher CO₂ content means the need to dispense a higher proportion of H₂, thereby increasing the reactivity of the mixture, but reducing its calorific value. On the contrary, with a smaller proportion of H₂, the calorific value of the burnt mixture increases. This is an explanation for the trend that with increasing CO₂ content, the electrical power increases (in Figs. 7-9, the kW values for the first and second power generators 6, 12), and with increasing CH₄ content, the thermal power of the unit increases due to higher calorific value of the combustion mixture (in Figs. 7-9, the kW values for the accumulator 15).

The tests were performed to the extent of real composition of gases obtained from a biogas station, so that the lower limit of the CH₄ content was 44 % and the upper 60 %. From other tests performed during engine development, it can be concluded that the engine has stable operation when burning biogas with a CO₂ content in the range of 20-30 % with simultaneous mixing of H₂ also in the range of 20-30 %. For the above reasons, it is clear that the ratio between H₂, CO₂ and CH₄ affects the size of the electrical and thermal output achieved. However, the primary requirement in this example was to obtain the maximum value of electricity at the output of the unit, and therefore it can be concluded that to this end, it is optimal to burn less calorific biogas with a CH₄ content up to 55 % and a CO₂ content in the range of 35-40 %, which will be enriched with approx. 25 % of H₂, thereby obtaining the resulting fuel mixture with a volume content of the main components: CH₄ = 44-46 % by volume, CO₂ = 28-30 % by volume, H₂ = 24-26 % by volume.

### Industrial Applicability

The above-described devices can be used in combination with existing biogas pipeline infrastructure and power and hot water networks in agricultural production, bio-waste or composting plants. The biogas energy recovery unit can be used in any technology where biogas is produced (biogas stations, waste water treatment plants, waste dumps) and it can be connected by pipeline to the corresponding device, while maintaining the overpressure of biogas at an input of about 0.8 bar (0.08 MPa).

### Reference Signs List

- 1.: fuel inlet
- 2.: pulse detonation engine
- 3.: surface cooler
- 4.: first flue gas outlet
- 5.: turbocharger or centripetal gas turbine
- 6.: first power generator
- 7.: second flue gas outlet
- 8.: flue gas exchanger (or economizer)
- 9.: third flue gas outlet
- 10.: feeding pump
- 11.: thrust steam turbine
- 12.: second power generator
- 13.: cooler (or mixing exchanger)
- 14.: supply tank
- 15.: accumulator (or heat exchanger)
- 16.: valve assembly
- 17.: suction diffuser
- 18.: baffle
- 19.: air curtain
- 20.: valve
- 21.: insulating pad
- 22.: support plate
- 23.: fuel supply tube
- 24.: centring and limiting ring
- 25.: clip
- 26.: graphite seal
- 27.: combustion chamber
- 28.: spark plug
- 29.: outlet tube
- 30.: longitudinal axis
- 31.: outer perforation of the air curtain 19
- 32.: inner perforation of the air curtain 19
- 33.: shutter of the valve 20
- 34.: opening of the valve 20
- 35.: circular base of the valve 20
- 36.: circumferential part of the valve 20
- 37.: outer circle of the outer perforations 31
- 38.: inner circle of the inner perforations 32
- 39.: feed opening of the fuel supply tube 23

## Claims

1. A pulse detonation engine (2) for the combustion of a mixture of biogas and hydrogen, comprising a valve assembly (16) and a combustion chamber (27) connected to the valve assembly (16), the combustion chamber (27) comprising a detonation initiation means and a first flue gas outlet (4), **characterised in that** the valve assembly (16) comprises:
a. a suction diffuser (17) for supplying combustion air, wherein the suction diffuser (17) is in the shape of de Laval nozzle with a variable, converging-diverging circular cross-section and extends along the direction of a longitudinal axis (30), wherein the circular cross-section of the suction diffuser (17) is narrower in a central portion thereof than in an end portion thereof facing the combustion chamber (27);
b. a fuel supply tube (23) for supplying fuel, extending through the centre of the suction diffuser (17) in the direction of the longitudinal axis (30) and leading to the combustion chamber (27);
c. a baffle (18) arranged outside the fuel supply tube (23) and co-axially relative to the longitudinal axis (30), wherein the baffle (18) is in the shape of a cone or a truncated cone, the base of which is oriented towards the end portion of the suction diffuser (17);
d. an air curtain (19) arranged outside the fuel supply tube (23) and adjacent to the end portion of the suction diffuser (17) and to the base of the baffle (18) such that it is arranged perpendicular to the longitudinal axis (30), wherein the air curtain comprises perforations (31, 32) for air supply;
e. a support plate (22) arranged outside the fuel supply tube (23) and at a distance from the air curtain (19) in the direction of the longitudinal axis (30) such that it is arranged perpendicular to the longitudinal axis (30), wherein the side of the support plate (22) adjacent to the air curtain (19) is of a concave shape or of a shape narrowing towards the circumference of the support plate (22); and
f. a valve (20) arranged outside the fuel supply tube (23) and between the air curtain (19) and the support plate (22) such that it is arranged perpendicular to the longitudinal axis (30), wherein the valve (20) is in the shape of an n-polygon or a circle with an opening (34) for the fuel supply tube (23) in the centre and with a circular base (35) around the perimeter of the opening (34), wherein the valve (20) is divided from a circumferential part (36) towards the circular base (35) into n shutters (33) of an essentially trapezoidal shape, each short base of said trapezoids being firmly or integrally connected to the circular base (35) and each long base of said trapezoids forming the circumferential part (36) of the valve (20), wherein the shutters (33) of the valve (20) are bendable such that in a closed position of the valve (20), the shutters (33) are adjacent to the air curtain (19), thus overlapping the perforations (31, 32) and blocking air supply into the combustion chamber (27) as well as expansion of flue gases into the suction diffuser (17), and in an open position of the valve (20), the shutters (33) are adjacent to the support plate (22), thereby leaving the perforations (31, 32) open and allowing air to flow into the combustion chamber (27).

2. The pulse detonation engine (2) according to claim 1, wherein the perforations (31, 32) are arranged on the air curtain (19) in two circular rows such that the outer perforations (31) are arranged along an outer circle (37) and the inner perforations (32) are arranged along an inner circle (38) at a distance from the outer circle (37).

3. The pulse detonation engine (2) according to claim 2, wherein the outer perforations (31) have a larger diameter than the inner perforations (32).

4. The pulse detonation engine (2) according to claim 2 or 3, wherein adjacent outer and inner perforations (31, 32) are arranged radially relative to the centre of the air curtain (19).

5. The pulse detonation engine (2) according to any of claims 2 to 4, wherein each shutter (33) overlaps one inner and one outer perforation (31, 32) in the closed position of the valve (20).

6. The pulse detonation engine (2) according to any of the previous claims, wherein it comprises twelve outer perforations (31) of the air curtain (19), twelve inner perforations (32) of the air curtain (19) and twelve shutters (33) of the valve (20).

7. The pulse detonation engine (2) according to any of the previous claims, wherein the diameter of the valve (20) and the diameter of the support plate (22) are smaller than the diameter of the air curtain (19).

8. The pulse detonation engine (2) according to claim 7, wherein the diameter of the support plate (22) is smaller than the diameter of the valve (20).

9. The pulse detonation engine (2) according to any of the previous claims, wherein the shutters (33) of the valve (20) are bendable at an angle in the range of 3-13°.

10. The pulse detonation engine (2) according to any of the previous claims, wherein between the circular base (35) of the valve (20) and the support plate (22), an insulating pad (21) is arranged outside the fuel supply tube (23) such that it is arranged perpendicular relative to the longitudinal axis (30).

11. The pulse detonation engine (2) according to any of the previous claims, wherein the fuel supply tube (23) at an end leading to the combustion chamber (27) comprises feed openings (39) oriented essentially radially relative to the longitudinal axis (30).

12. The pulse detonation engine (2) according to any of the previous claims, wherein the combustion chamber (27) is connected to an outlet tube (29) with the first flue gas outlet (4).

13. A biogas energy recovery unit, comprising the pulse detonation engine (2) according to any of the previous claims, **characterised in that** the pulse detonation engine (2) is further connected via the first flue gas outlet (4) to a turbocharger (5) or a centripetal gas turbine (5), which turbocharger (5) or centripetal gas turbine (5) is connected to a first power generator (6).

14. The unit according to claim 13, wherein the turbocharger (5) or the centripetal gas turbine (5) is further connected via a second flue gas outlet (7) to a flue gas exchanger (8), wherein in the flue gas exchanger (8), the flue gas is in thermal contact with a heat transfer medium of a closed Rankin-Clausius steam cycle, wherein the flue gas is configured to leave the flue gas exchanger (8) by a third flue gas outlet (9).

15. The unit according to claim 14, wherein the closed Rankin-Clausius steam cycle comprises the flue gas exchanger (8) connected to a surface cooler (3) arranged in thermal contact with the pulse detonation engine (2), wherein the surface cooler (3) is further connected to a thrust steam turbine (11) connected to a second power generator (12), wherein the thrust steam turbine (11) is further connected via a supply tank (14) and a feeding pump (10) to the flue gas exchanger (8).

16. The unit according to claim 15, wherein between the thrust steam turbine (11) and the supply tank (14), a cooler (13) is arranged in the closed Rankin-Clausius steam cycle, which is optionally connected to an accumulator (15) or to a heating system of a fermentation tank of a biogas station or to a biomass drying system.

17. The unit according to any of claims 13 to 16, wherein the surface cooler (3) is arranged in thermal contact with the outlet tube (29) of the pulse detonation engine (2).

18. A method of combustion of a mixture of biogas and hydrogen in the pulse detonation engine (2) according to any of claims 1 to 12 or in the biogas energy recovery unit according to any of claims 13 to 17, **characterised in that** a fuel mixture comprising CH₄, CO₂ and H₂ is fed into the combustion chamber (27).

19. The method according to claim 18, wherein a fuel mixture comprising 44-60 % by volume of CH₄, 20-30 % by volume of CO₂ and 20-30 % by volume of H₂ is fed into the combustion chamber (27).

20. The method according to any of claims 18 to 19, wherein a fuel mixture comprising 44-46 % by volume of CH₄, 28-30 % by volume of CO₂ and 24-26 % by volume of H₂ is fed into the combustion chamber (27).

21. The method according to any of claims 18 to 20, wherein the fuel mixture is fed into the combustion chamber (27) with an overpressure of 0.8-0.9 bar (0.08-0.09 MPa).

## Patentansprüche

1. Eine Impulsdetonationsmaschine (2) zur Verbrennung eines Gemisches aus Biogas und Wasserstoff, umfassend eine Ventilanordnung (16) und eine mit der Ventilanordnung (16) verbundene Brennkammer (27), wobei die Brennkammer (27) ein Detonationseinleitungsmittel und einen ersten Rauchgasauslass (4) umfasst, **dadurch gekennzeichnet, dass** die Ventilanordnung (16) die folgenden Merkmale umfasst:
a. einen Saugdiffusor (17) zum Zuführen von Verbrennungsluft, wobei der Saugdiffusor (17) in Form einer de Laval-Düse mit einem variablen, konvergierend-divergierenden kreisförmigen Querschnitt ausgebildet ist und sich entlang der Richtung einer Längsachse (30) erstreckt, wobei der kreisförmige Querschnitt des Saugdiffusors (17) in seinem zentralen Abschnitt schmaler ist als in einem der Brennkammer (27) zugewandten Endabschnitt;
b. ein Brennstoffzufuhrrohr (23) zum Zuführen von Brennstoff, das sich durch die Mitte des Saugdiffusors (17) in Richtung der Längsachse (30) erstreckt und zur Brennkammer (27) führt;
c. einem außerhalb des Brennstoffzufuhrrohrs (23) und koaxial zur Längsachse (30) angeordneten Leitblech (18), wobei das Leitblech (18) in Form eines Kegels oder eines Kegelstumpfes ausgebildet ist, dessen Boden zum Endabschnitt des Saugdiffusors (17) ausgerichtet ist;
d. einen Luftvorhang (19), der außerhalb des Brennstoffzufuhrrohrs (23) und benachbart zu dem Endabschnitt des Saugdiffusors (17) und zu dem Boden des Leitblechs (18) angeordnet ist, so dass er senkrecht zur Längsachse (30) angeordnet ist, wobei der Luftvorhang Perforationen (31, 32) zur Luftzufuhr umfasst;
e. eine außerhalb des Brennstoffzufuhrrohrs (23) und beabstandet vom Luftvorhang (19) in Richtung der Längsachse (30) angeordnete Trägerplatte (22), so dass sie senkrecht zur Längsachse (30) angeordnet ist, wobei die dem Luftvorhang (19) benachbarte Seite der Trägerplatte (22) in einer konkaven Form oder einer sich zum Umfang der Trägerplatte (22) verengenden Form ausgerichtet ist; und
f. ein außerhalb des Brennstoffzufuhrrohrs (23) und zwischen dem Luftvorhang (19) und der Trägerplatte (22) angeordnetes Ventil (20), so dass es senkrecht zur Längsachse (30) angeordnet ist, wobei das Ventil (20) in der Form eines n-Polygons oder eines Kreises mit einer Öffnung (34) für das Brennstoffzufuhrrohr (23) in der Mitte und mit einer kreisförmigen Basis (35) um den Umfang der Öffnung (34) angeordnet ist, wobei das Ventil (20) von einem Umfangsteil (36) in Richtung der kreisförmigen Basis (35) in n Klappen (33) einer im Wesentlichen trapezförmigen Form unterteilt ist, wobei jeder kurze Boden der Trapeze fest oder integral mit der kreisförmigen Basis (35) verbunden ist und jeder lange Boden der Trapeze den Umfangsteil (36) des Ventils (20) bildet, wobei die Klappen (33) des Ventils (20) derart biegbar sind, dass in einer Schliessstellung des Ventils (20), die Klappen (33) an den Luftvorhang (19) angrenzen und somit die Perforationen (31, 32) überlappen und die Luftzufuhr in die Brennkammer (27) sowie eine Expansion von Rauchgasen in den Saugdiffusor (17) blockieren, und dass in einer Offenstellung des Ventils (20), die Klappen (33) an die Trägerplatte (22) angrenzen und dadurch die Perforationen (31, 32) öffnen und Luft in die Brennkammer (27) strömen lassen.

2. Die Impulsdetonationsmaschine (2) nach Anspruch 1, wobei die Perforationen (31, 32) an dem Luftvorhang (19) in zwei kreisförmigen Reihen angeordnet sind, so dass die äußeren Perforationen (31) entlang eines Außenkreises (37) angeordnet sind und die inneren Perforationen (32) entlang eines Innenkreises (38) in einem Abstand von dem Außenkreis (37) angeordnet sind.

3. Die Impulsdetonationsmaschine (2) nach Anspruch 2, wobei die äußeren Perforationen (31) einen größeren Durchmesser als die inneren Perforationen (32) aufweisen.

4. Die Impulsdetonationsmaschine (2) nach Anspruch 2 oder 3, wobei benachbarte äußere und innere Perforationen (31, 32) radial relativ zur Mitte des Luftvorhangs (19) angeordnet sind.

5. Die Impulsdetonationsmaschine (2) nach einem der Ansprüche 2 bis 4, wobei jede Klappe (33) in der Schliessstellung des Ventils (20) eine innere und eine äußere Perforation (31, 32) überlappt.

6. Die Impulsdetonationsmaschine (2) nach einem der vorhergehenden Ansprüche, wobei sie zwölf äußere Perforationen (31) des Luftvorhangs (19), zwölf innere Perforationen (32) des Luftvorhangs (19) und zwölf Klappen (33) des Ventils (20) umfasst.

7. Die Impulsdetonationsmaschine (2) nach einem der vorhergehenden Ansprüche, wobei der Durchmesser des Ventils (20) und der Durchmesser der Trägerplatte (22) kleiner als der Durchmesser des Luftvorhangs (19) sind.

8. Die Impulsdetonationsmaschine (2) nach Anspruch 7, wobei der Durchmesser der Trägerplatte (22) kleiner als der Durchmesser des Ventils (20) ist.

9. Die Impulsdetonationsmaschine (2) nach einem der vorhergehenden Ansprüche, wobei die Klappen (33) des Ventils (20) in einem Winkel im Bereich von 3-13° biegbar sind.

10. Die Impulsdetonationsmaschine (2) nach einem der vorhergehenden Ansprüche, wobei zwischen der kreisförmigen Basis (35) des Ventils (20) und der Trägerplatte (22) ein Isolierkissen (21) außerhalb des Brennstoffzufuhrrohrs (23) angeordnet ist, so dass es senkrecht zur Längsachse (30) angeordnet ist.

11. Die Impulsdetonationsmaschine (2) nach einem der vorhergehenden Ansprüche, wobei das Brennstoffzufuhrrohr (23) an einem Ende, das zu der Brennkammer (27) führt, Zuführöffnungen (39) umfasst, die im Wesentlichen radial relativ zu der Längsachse (30) ausgerichtet sind.

12. Die Impulsdetonationsmaschine (2) nach einem der vorhergehenden Ansprüche, wobei die Brennkammer (27) mit einem Auslassrohr (29) mit dem ersten Rauchgasauslass (4) verbunden ist.

13. Eine Einheit zur Rückgewinnung von Biogas, umfassend die Impulsdetonationsmaschine (2) nach einem der vorhergehenden Ansprüche, **dadurch gekennzeichnet, dass** die Impulsdetonationsmaschine (2) ferner über den ersten Rauchgasauslass (4) mit einem Turbolader (5) oder einer Zentripetalgasturbine (5) verbunden ist, wobei der Turbolader (5) oder die Zentripetalgasturbine (5) mit einem ersten Stromgenerator (6) verbunden ist.

14. Die Einheit nach Anspruch 13, wobei der Turbolader (5) oder die Zentripetalgasturbine (5) ferner über einen zweiten Rauchgasauslass (7) mit einem Rauchgastauscher (8) verbunden ist, wobei in dem Rauchgastauscher (8) das Rauchgas mit einem Wärmeträgermedium eines geschlossenen Rankin-Clausius-Dampfzyklus in thermischem Kontakt steht, wobei das Rauchgas dazu eingerichtet ist, den Rauchgastauscher (8) durch einen dritten Rauchgasauslass (9) zu verlassen.

15. Die Einheit nach Anspruch 14, wobei der geschlossene Rankin-Clausius-Dampfzyklus den Rauchgastauscher (8) umfasst, der mit einem Oberflächenkühler (3) verbunden ist, der in thermischem Kontakt mit der Impulsdetonationsmaschine (2) angeordnet ist, wobei der Oberflächenkühler (3) ferner mit einer Schubdampfturbine (11) verbunden ist, die mit einem zweiten Stromgenerator (12) verbunden ist, wobei die Schubdampfturbine (11) ferner über einen Versorgungstank (14) und eine Förderpumpe (10) mit dem Rauchgastauscher (8) verbunden ist.

16. Die Einheit nach Anspruch 15, wobei zwischen der Schubdampfturbine (11) und dem Versorgungstank (14) im geschlossenen Rankin-Clausius-Dampfzyklus ein Kühler (13) angeordnet ist, der gegebenenfalls mit einem Akkumulator (15) oder einem Heizsystem eines Gärtanks einer Biogasstation oder einem Biomassetrocknungssystem verbunden ist.

17. Die Einheit nach einem der Ansprüche 13 bis 16, wobei der Oberflächenkühler (3) in thermischem Kontakt mit dem Auslassrohr (29) der Impulsdetonationsmaschine (2) angeordnet ist.

18. Ein Verfahren zur Verbrennung eines Gemisches aus Biogas und Wasserstoff in der Impulsdetonationsmaschine (2) nach einem der Ansprüche 1 bis 12 oder in der Einheit zur Rückgewinnung von Biogas nach einem der Ansprüche 13 bis 17, **dadurch gekennzeichnet, dass** ein Brennstoffgemisch enthaltend CH₄, CO₂ und H₂ in die Brennkammer (27) eingespeist wird.

19. Das Verfahren nach Anspruch 18, wobei ein Brennstoffgemisch mit 44-60 Vol.-% CH₄, 20-30 Vol.-% CO₂ und 20-30 Vol.-% H₂ in die Brennkammer (27) eingespeist wird.

20. Das Verfahren nach einem der Ansprüche 18 bis 19, wobei ein Brennstoffgemisch mit 44-46 Vol.-% CH₄, 28-30 Vol.-% CO₂ und 24-26 Vol.-% H₂ in die Brennkammer (27) eingespeist wird.

21. Das Verfahren nach einem der Ansprüche 18 bis 20, wobei das Brennstoffgemisch mit einem Überdruck von 0,8-0,9 bar (0,08-0,09 MPa) in die Brennkammer (27) eingespeist wird.

## Revendications

1. Un moteur à détonation pulsée (2) pour la combustion d'un mélange de biogaz et d'hydrogène, comprenant un ensemble soupape (16) et une chambre de combustion (27) reliée à l'ensemble soupape (16), où la chambre de combustion (27) comprend un moyen d'initiation de détonation et une première sortie de gaz de combustion (4), **caractérisé en ce que** l'ensemble soupape (16) comprend :
a. un diffuseur d'aspiration (17) pour fournir de l'air de combustion, où le diffuseur d'aspiration (17) a la forme d'une buse de Laval ayant une section transversale circulaire convergente-divergente variable et s'étend le long de la direction d'un axe longitudinal (30), où la section transversale circulaire du diffuseur d'aspiration (17) est plus étroite dans une partie centrale de celui-ci que dans une partie d'extrémité de celui-ci faisant face à la chambre de combustion (27);
b. un tube d'alimentation en carburant (23) pour alimenter en carburant, s'étendant à travers le centre du diffuseur d'aspiration (17) dans la direction de l'axe longitudinal (30) et menant à la chambre de combustion (27);
c. un déflecteur (18) disposé à l'extérieur du tube d'alimentation en carburant (23) et coaxial par rapport à l'axe longitudinal (30), où le déflecteur (18) se présente sous la forme d'un cône ou d'un cône tronqué, dont la base est orientée vers la partie d'extrémité du diffuseur d'aspiration (17);
d. un rideau d'air (19) disposé à l'extérieur du tube d'alimentation en carburant (23) et adjacent à la partie d'extrémité du diffuseur d'aspiration (17) et à la base du déflecteur (18) de telle sorte qu'il est disposé perpendiculairement à l'axe longitudinal (30), où le rideau d'air comprend des perforations (31, 32) pour l'alimentation en air;
e. une plaque de support (22) disposée à l'extérieur du tube d'alimentation en carburant (23) et à une distance du rideau d'air (19) dans la direction de l'axe longitudinal (30) de telle sorte qu'elle est disposée perpendiculairement à l'axe longitudinal (30), où le côté de la plaque de support (22) adjacent au rideau d'air (19) a une forme concave ou une forme se rétrécissant vers la circonférence de la plaque de support (22); et
f. une soupape (20) disposée à l'extérieur du tube d'alimentation en carburant (23) et entre le rideau d'air (19) et la plaque de support (22) de telle sorte qu'elle est disposée perpendiculairement à l'axe longitudinal (30), où la soupape (20) a la forme d'un polygone n ou d'un cercle ayant une ouverture (34) pour le tube d'alimentation en carburant (23) au centre et avec une base circulaire (35) autour du périmètre de l'ouverture (34), où la soupape (20) est divisée d'une partie circonférentielle (36) vers la base circulaire (35) en n volets (33) d'une forme essentiellement trapézoïdale, chaque base courte desdits trapézoïdes étant fermement ou intégralement reliée à la base circulaire (35) et chaque base longue desdits trapézoïdes formant la partie circonférentielle (36) de la soupape (20), où les volets (33) de la soupape (20) sont pliables de telle sorte que, dans une position fermée de la soupape (20), les volets (33) sont adjacents au rideau d'air (19), chevauchant ainsi les perforations (31, 32) et bloquant l'alimentation en air dans la chambre de combustion (27) ainsi que l'expansion de gaz de combustion dans le diffuseur d'aspiration (17), et dans une position ouverte de la soupape (20), les volets (33) sont adjacents à la plaque de support (22), laissant ainsi les perforations (31, 32) ouvertes et permettant à l'air de s'écouler dans la chambre de combustion (27).

2. Le moteur à détonation pulsée (2) selon la revendication 1, où les perforations (31, 32) sont disposées sur le rideau d'air (19) en deux rangées circulaires de telle sorte que les perforations externes (31) sont disposées le long d'un cercle externe (37) et les perforations internes (32) sont disposées le long d'un cercle interne (38) à une distance du cercle externe (37).

3. Le moteur à détonation pulsée (2) selon la revendication 2, où les perforations externes (31) ont un diamètre plus grand que les perforations internes (32).

4. Le moteur à détonation pulsée (2) selon la revendication 2 ou 3, où des perforations externes et internes adjacentes (31, 32) sont disposées radialement par rapport au centre du rideau d'air (19).

5. Le moteur à détonation pulsée (2) selon l'une quelconque des revendications 2 à 4, où chaque volet (33) chevauche une perforation interne et une perforation externe (31, 32) dans la position fermée de la soupape (20).

6. Le moteur à détonation pulsée (2) selon l'une quelconque des revendications précédentes, où il comprend douze perforations externes (31) du rideau d'air (19), douze perforations internes (32) du rideau d'air (19) et douze volets (33) de la soupape (20).

7. Le moteur à détonation pulsée (2) selon l'une quelconque des revendications précédentes, où le diamètre de la soupape (20) et le diamètre de la plaque de support (22) sont inférieurs au diamètre du rideau d'air (19).

8. Le moteur à détonation pulsée (2) selon la revendication 7, où le diamètre de la plaque de support (22) est inférieur au diamètre de la soupape (20).

9. Le moteur à détonation pulsée (2) selon l'une quelconque des revendications précédentes, où les volets (33) de la soupape (20) sont pliables à un angle dans la plage de 3 à 13°.

10. Le moteur à détonation pulsée (2) selon l'une quelconque des revendications précédentes, où entre la base circulaire (35) de la soupape (20) et la plaque de support (22), un tampon isolant (21) est disposé à l'extérieur du tube d'alimentation en carburant (23) de telle sorte qu'il est disposé perpendiculairement par rapport à l'axe longitudinal (30).

11. Le moteur à détonation pulsée (2) selon l'une quelconque des revendications précédentes, où le tube d'alimentation en carburant (23) à une extrémité menant à la chambre de combustion (27) comprend des ouvertures d'alimentation (39) orientées essentiellement radialement par rapport à l'axe longitudinal (30).

12. Le moteur à détonation pulsée (2) selon l'une quelconque des revendications précédentes, où la chambre de combustion (27) est reliée à un tube de sortie (29) avec la première sortie de gaz de combustion (4).

13. Une unité de récupération d'énergie de biogaz, comprenant le moteur à détonation pulsée (2) selon l'une quelconque des revendications précédentes, **caractérisée en ce que** le moteur à détonation pulsée (2) est en outre relié par la première sortie de gaz de combustion (4) à un turbocompresseur (5) ou à une turbine à gaz centripète (5), lequel turbocompresseur (5) ou turbine à gaz centripète (5) est relié à un premier générateur d'énergie (6).

14. L'unité selon la revendication 13, où le turbocompresseur (5) ou la turbine à gaz centripète (5) est en outre reliée par une seconde sortie de gaz de combustion (7) à un échangeur de gaz de combustion (8), où dans l'échangeur de gaz de combustion (8), le gaz de combustion est en contact thermique avec un milieu de transfert de chaleur d'un cycle de vapeur de Rankin-Clausius fermé, où le gaz de combustion est configuré pour laisser l'échangeur de gaz de combustion (8) par une troisième sortie de gaz de combustion (9).

15. L'unité selon la revendication 14, où le cycle de vapeur de Rankin-Clausius fermé comprend l'échangeur de gaz de combustion (8) relié à un refroidisseur de surface (3) disposé en contact thermique avec le moteur à détonation pulsée (2), où le refroidisseur de surface (3) est en outre relié à une turbine à vapeur de poussée (11) reliée à un second générateur d'énergie (12), où la turbine à vapeur de poussée (11) ets en outre reliée par un réservoir d'alimentation (14) et une pompe d'alimentation (10) à l'échangeur de gaz de combustion (8).

16. L'unité selon la revendication 15, où entre la turbine à vapeur de poussée (11) et le réservoir d'alimentation (14), un refroidisseur (13) est disposé dans le cycle de vapeur de Rankin-Clausius fermé, qui est éventuellement relié à un accumulateur (15) ou à un système de chauffage d'un réservoir de fermentation d'une station de biogaz ou à un système de séchage de biomasse.

17. L'unité selon l'une quelconque des revendications 13 à 16, où le refroidisseur de surface (3) est disposé en contact thermique avec le tube de sortie (29) du moteur à détonation pulsée (2).

18. Un procédé de combustion d'un mélange de biogaz et d'hydrogène dans le moteur à détonation pulsée (2) selon l'une quelconque des revendications 1 à 12 ou dans l'unité de récupération d'énergie de biogaz selon l'une quelconque des revendications 13 à 17, **caractérisé en ce qu'**un mélange de carburant comprenant CH₄, CO₂ et H₂ est introduit dans la chambre de combustion (27).

19. Le procédé selon la revendication 18, où un mélange de carburant comprenant de 44 à 60 % en volume de CH₄, de 20 à 30 % en volume de CO₂ et de 20 à 30 % en volume de H₂ est introduit dans la chambre de combustion (27).

20. Le procédé selon l'une quelconque des revendications 18 à 19, où un mélange de carburant comprenant de 44 à 46 % en volume de CH₄, de 28 à 30 % en volume de CO₂ et de 24 à 26 % en volume de H₂ est introduit dans la chambre de combustion (27).

21. Le procédé selon l'une quelconque des revendications 18 à 20, où le mélange de carburant est introduit dans la chambre de combustion (27) avec une surpression de 0,8 à 0,9 bar (0,08 à 0,09 MPa).
